(19) Europäisches Patentamt
European Patent Office
Office européen des brevets

(11) EP 1 072 657 B1

(12) **EUROPEAN PATENT SPECIFICATION**

(45) Date of publication and mention of the grant of the patent:
**14.01.2004 Bulletin 2004/03**

(51) Int Cl.[7]: **C09D 103/06**, C09J 7/02

(21) Application number: **99114032.8**

(22) Date of filing: **19.07.1999**

(54) **Starch ester coatings**

Beschichtungen auf Basis von Stärkeestern

Revêtements à base d'esters d'amidon

(84) Designated Contracting States:
**AT BE CH CY DE DK ES FI FR GB GR IE IT LI LU MC NL PT SE**

(43) Date of publication of application:
**31.01.2001 Bulletin 2001/05**

(73) Proprietor: **National Starch and Chemical Investment Holding Corporation**
**Wilmington, Delaware 19803-7663 (US)**

(72) Inventors:
- **Atkinson, Jeffrey G.**
  **Neshanic Station, New Jersey 08853 (US)**
- **Billmers, Robert L.**
  **Stockton, New Jersey 08559 (US)**
- **Graham, Susan W.**
  **Chattanooga, Tennessee 37421 (US)**
- **Gzemski, Charles J.**
  **Milltown, New Jersey 08850 (US)**
- **Sweeney, Gregory A.**
  **Lebanon New Jersey 08833 (US)**

(74) Representative:
**Held, Stephan, Dr.rer.nat., Dipl.-Chem. et al**
**Meissner, Bolte & Partner**
**Postfach 86 03 29**
**81630 München (DE)**

(56) References cited:
**WO-A-93/20110**
**WO-A-96/17888**
**WO-A-97/49762**
**DE-A- 4 326 118**
**DE-A- 19 613 484**
**US-A- 3 746 558**
**US-A- 5 224 989**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 072 657 B1

## Description

This invention relates to release coatings and moisture vapor barrier coatings made from selected modified starch esters and more particularly starch esters having an ester component of 2 to 8 carbon atoms and an intermediate DS of from 1.0 to 2.2.

Release coatings generally comprise compositions and/or agents that control or eliminate the adhesion between two surfaces. These coatings typically have good release characteristics, which is the capacity of permitting an adhesive material sticking to a surface to peel off easily (i.e., it must provide low interfacial tension with the adhesive mass to which it is in contact). However, good release properties are not the only characteristic desired in such materials. Other characteristics needed in release coatings include good cohesive strength, good adhesion with the backing member substrate and no contamination or component migration into the adhesive layer.

Silicone materials such as organosiloxanes are well known for their use as release agents and coatings. US-A 4,983,701 US-A 5,356,706 and US-A 5,376,420 all disclose the use of silicone materials as release agents in different applications. Other types of release agents which have been used include synthetic polymers such as polyolefins and fluorocarbons, long chain alkyl derivatives such as fatty ester synthetic waxes and fatty acids and waxes such as petroleum, vegetable and animal waxes.

While the materials exemplified above and particularly the silicone materials have been shown to have suitable release characteristics for various applications, they are not useful when repulpable, recyclable paper products are desired.

In packaging and other applications a moisture barrier is sometimes needed to prevent moisture vapor transmission through the paper or other substrate material. In many cases, plastic materials such as polyethylene have been used to provide a moisture barrier or water resistant coating. While these materials are generally useful as protective coatings, they are not useful in paper product applications where repulpable and recyclable products are desired.

Starch based materials have been used in some coating applications. For example, U.S-A-3,746,558 discloses an aqueous suspension of hydrophobic, low DS starch esters which can be used to provide water resistant coatings. US-A-4,095,992 discloses mixed starch esters of mono- and polycarboxylic acid anhydrides as thermosetting, hydrophobic coatings that provide water resistance. European Patent No. 0 545 228 A1 shows the use of a mixture of modified starch and a synthetic polymer as a moisture barrier in moisture resistant sacks. Another European Patent No. 0 547 551 A1 discloses compositions comprising modified starch, gelatin, plasticizer, water and lipid as edible films which are effective in providing water, lipid, solute, gas, physical or microbial barriers in foods.

WO-A-9749762 discloses a hydrophobic polymer dispersion and a process for the preparation thereof. The polymer dispersions may be used for coating paper, as a primer or a component in labelling adhesives or paint. US-A-5224989 relates to a film-forming dispersion useful for the formation of a coating on shaped drug and food articles and contains essentially acetylester or oxidized starch containing from 0.5 to 2.4 weight percent of bonded acetyl and being present in an amount of 1-25 weight percent in the dispersion. The dispersion contains 0.8-8 weight percent of triethylcitrate dissolved in water. The coating protects the active ingredients against humidity. US-A-3746558 discloses stable aqueous colloidal suspensions of hydrophobic starch derivatives and the application thereof in coating operations. The aqueous suspension comprises 1 to 50% based on the weight of the suspension of particles of hydrophobic starch containing esters groups in an amount corresponding to a degree of substitution of 0.1 to 1.0. When they are dried in form of a thin layer spread on a surface they form clear films of increased water resistance.

While the starch materials noted above do provide a moisture barrier and/or water resistance in different applications, they do not provide a thermoplastic coating material which can be readily processed to form a continuous film coating with good water vapor barrier properties.

Now it has been found that coating compositions made from selected starch esters provide good release properties and good water barrier properties as well as being biodegradable and environmentally friendly making them particularly useful in paper applications where repulpabllity and recyclability are desired.

More particularly, this invention relates to release coating compositions comprising:

a) a starch ester having an ester component of 2 to 8 carbon atoms and a degree of substitution (DS) of from 1.0 to 2.2;
b) a hydrophobic plasticizer, which plasticizer is a non-volatile, polar organic material that is compatible with the starch ester and is present in sufficient amount to lower the $T_g$ of the starch ester to a temperature of 75 to 200°C; and
c) water;

wherein the composition comprises a latex of discrete particles of starch and plasticizer suspended in water.

This invention also involves the process of preparing a release coated substrate wherein the release coating composition as described herein is applied as a latex to a substrate and then heated to a suitable temperature causing

the particles to melt and flow into a continuous film. The invention is further directed to pressure sensitive adhesive substrates comprising a substrate, a pressure sensitive adhesive layer and a release coating layer which comprises the starch ester release coating composition as described herein.

This invention further relates to moisture vapor barrier coating compositions comprising:

a) a starch ester having an ester component of 2 to 8 carbon atoms and a degree of substitution (DS) of from 1.0 to 2.2;
b) a hydrophobic plasticizer, which plasticizer is a non-volatile, polar organic material that is compatible with the starch ester and is present in sufficient amount to lower the $T_g$ of the starch ester to a temperature of 75 to 200°C; and
c) water;

wherein the composition comprises a latex of discrete particles of starch and plasticizer suspended in water.

This invention also involves the process of preparing a moisture vapor barrier coated substrate wherein the moisture vapor barrier coating composition as described herein is applied as a latex to a substrate and then heated to a suitable temperature causing the particles to melt and flow into a continuous film.

The present invention provides release coating and moisture vapor barrier coating compositions comprising starch ester compounds having 2 to 8 carbon atoms in the ester component and a degree of substitution of from 1.0 to 2.2. These starch esters comprise ester compounds having the formula:

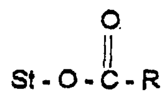

where St is the starch base material and R Is an alkyl, aryl, alkenyl, alkaryl or aralkyl of 1 to 7 carbon atoms, and preferably an alkyl or alkenyl of 1 to 4 carbon atoms. More preferably, the ester compound will contain an R group which is an alkyl of 1 to 2 carbon atoms. Starch esters of this type include starch acetate, starch propionate, starch butyrate, starch hexanoate, starch benzoate, blends of two or more of these esters, for example starch acetate/starch propionate, and mixed starch esters where the starch contains two or more different ester substituants, e.g., starch acetate/propionate, i.e., the ester having the formula such as :

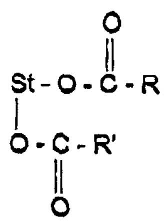

where R and R' represent different substituent groups as the R group defined above.

Additionally, the starch esters. as defined above, will have a DS (degree of substitution) of from 1.0 to 2.2, preferably from 1.2 to 1.9 and more preferably from 1.4 to 1.6. Stated differently, the starch ester will have a DS that is high enough to prevent water dispersion and is high enough to make the starch thermoplastic, i.e., having an anhydrous (without moisture or plasticizer) $T_g$ below the decomposition temperature of about 200 to 220°C. The term "degree of substitution" (DS) as used herein indicates the average number of sites per anhydroglucose unit of the starch molecule on which there are substituent groups.

The starch esters having intermediate DS as used in this invention can be prepared by reacting starch with organic acid anhydrides in a solvent system such as pyridine. An aqueous method for preparing the starch esters was recently disclosed in US-A-5,321,132. This method involves an aqueous one-step process wherein starch is reacted with high treatment levels of organic acid anhydride and high concentrations of alkaline reagents.

The base starch material used in the starch esters of this invention may be those derived from any plant source including corn, potato, wheat, rice. sago, tapioca, waxy maize, sorghum and high amylose starch, i.e., starch having at least 45% and more particularly at least 65% amylose content, such as high amylose corn. Starch flours may also be used. Also included are the conversion products derived from any of the former bases, such as dextrins prepared

by hydrolytic action of acid and/or heat, fluidity or thin boiling starches prepared by enzyme conversion or mild acid hydrolysis, oxidized starches prepared by treatment with oxidants such as sodium hydpochlorite, and derivatized starches such as cationic, anionic, amphoteric, non-ionic, and crosslinked. Stated differently, the starch material may comprise a granular or dispersed starch. By dispersed or non-granular starch is meant any starch which has had its structure disrupted or removed, i.e., is destructurized by either thermal (jet cooking, boiling water bath), mechanical (drum drying, spray drying, extrusion), or chemical (use of liquid ammonia, dextrinization, subject to high levels of caustic) means prior to derivatization.

The release coating and moisture vapor barrier coating compositions contains a plasticizer and water in addition to the starch ester. The plasticizer is a non-volatile organic material which is compatible with the starch ester. The plasticizer should be non-soluble in water, i.e., less than 5% dissolved in water and is hydrophobic wherein it absorbs low levels of moisture at high humidity, i.e., have a moisture content of less than 20%, preferably less than 15% by weight at 90% relative humidity (RH) and 23°C. The plasticizer material is also liquid at ambient or room temperature and is used in sufficient amount to lower the $T_g$ (glass transition temperature) of the starch ester to the desired processing range of about 75 to 200°C, preferably 80 to 135°C. This is necessary to facilitate the melting of the coating during drying or calendering steps such as used In the papermaking process. Typically the plasticizer will have a molecular weight of less than about 10,000. A variety of plasticizer materials can be used in combination with the selected starch esters to satisfy the desired conditions. Useful plasticizer materials include those containing polar groups such as sulfonamides, carboxylic acids and esters, carboxylate salts, amides, phosphate esters, alcohols i.e., hydroxy containing compounds. epoxides, sulfones, ethers, imides, amines, carbonates, ureas and urethanes. Preferred plasticizers are those containing sulfonamide, alcohol, amide and ester groups which absorb low levels of moisture at high humidity, i.e., have a moisture content of less than about 20%, preferably less than about 15% by weight, at 90% relatlve humidity and 23°C. The preferred plasticizers do not include the hydrophilic type compounds such as glycerin or sorbitol and other compounds of this type which are hygroscopic and easily pick up and absorb moisture. Useful plasticizers include low molecular weight polyesters such as polyethylene glycol and dicarboxylic acids, e.g., adipic acid/succinic acid. poly(hydroxybutyrate-co-valerate), polcaprolactone, alkoxylates of phenols and phenolic derivatives such as ethoxylates of phenol and bisphenol A, and fatty acid amides. The preferred plasticizers are the polyesters of polyethylene glycol and adipic acid or succinic acid, and the ethoxylate of bisphenol A.

The coating composition will generally comprise from 10 to 50% by weight of starch ester, about 0 to 30% by weight of plasticizer and 20 to 90% by weight water. Preferably the composition will comprise from 15 to 35% by weight of starch ester, from 5 to 25% by weight of plasticizer and 35 to 80% by weight of water. Other components which are conventionally used depending on the application may also be added to the composition including, for example, fillers, antioxidants, stabilizers, surfactants, waxes and dyes or colorants.

The starch ester of this invention is hydrophobic and not water soluble and cannot be dissolved or dispersed in water even at elevated temperatures, e.g., room temperature to 150°C, and therefore cannot be applied or coated as an aqueous solution. Therefore, the starch ester composition is formed into a latex having discrete particles of starch and plasticizer suspended in water. The latex is applied or coated onto the desired substrate and then dried to give a non-continuous film. Heating to a temperature of about the $T_g$ of the starch ester or higher, typically about 100 to 200°C, causes the particles to melt and flow, forming a continuous film on the substrate. Because water does not dissolve the polymer and is not responsible for film formation, heating above the $T_g$ of the starch ester can be done during the drying step and/or anytime after the water is evaporated. The coating can be dried by air drying or using an oven, dryer can or other conventional drying means. The coating can be heated to form a continuous film by techniques such as calendering or thermal processing.

Any conventional coating technique can be used to apply the coating composition to the substrate such as brushing, spreading, dipping, rolling, wire or knife coating. The technique is selected depending on the substrate to be coated. The composition can be applied to the substrate at room temperature or above, preferably 50 to 75°C, to reduce the viscosity of the formulation and facilitate removal of water. The mixture can also be prepared at ambient temperature or above. Heating the components during formulation helps absorb the plasticizer into the starch particles thereby providing a more uniform latex or dispersion.

The release coating composition can be applied to any substrate and is particularly useful for paper products such as those containing pressure sensitive adhesives. These starch ester release coatings used on paper products provide good release characteristics and because of their biodegradability and other environmental properties allow such products to be repulped and recycled. The moisture vapor barrier coating composition can be applied to any substrate and is particularly useful for paper products such as those used in food packaging. These starch ester coatings used on paper products provide good moisture vapor barrier properties and because of their biodegradability and other environmental properties allow such products to be repulped and recycled.

The following examples will further illustrate the embodiments of this invention. In these examples all parts are given by weight and all temperatures in degrees Celsius unless otherwise noted.

EXAMPLE I

A release coating composition containing the starch esters of this invention was prepared as follows.

Into a 250 ml Erlenmeyer flask, 16.5 g of anhydrous granular starch acetate (70% amylose corn starch with acetate DS = 1.3), 5.0 g ethoxylated bis-phenol A (Macol 206-EM, PPG Industries) and tap water were added to bring the total weight to 50.0 g. Using a stainless steel mixing spoon, the contents of the Erlenmeyer were mixed vigorously until the mixture formed a paste. A lead weight was placed around the opening of the flask and the flask placed in a boiling water bath so that the water level was above the material contents. The flask was heated for one hour with occasional stirring and then removed from the boiling water bath and mixed well. Water was added to bring the weight up to the starting tare weight. The mixture was placed back in the boiling water bath until ready for application as shown below.

EXAMPLE II

A sheet of paper label base stock (9" x 11") (bases weight; 43#, 270 sec. high pressure Gurley) was placed on a large glass plate and the top edge of the paper taped to the glass plate. The glass plate was laid on a flat horizontal surface and a #9 wire round placed at the top of the paper substrate. The coating material prepared in Example I was removed from the boiling'water bath and a ½ inch bead applied across the top of the paper substrate (just below the wire round). The ends of the wire round were grasped and drawn down past the end of the paper substrate while applying light pressure. The paper with coating was removed from the glass plate and placed on a drying ring with the coated side facing down. The center disk was placed onto the drying ring and a weight placed thereon and the coating was allowed to air dry.

The dried paper substrate was removed from the drying ring. The coated substrate was calendered using a heated stainless steel roller with the coated side facing the heated roller. The conditions were 34500 kPa (5000 psi) (pressure between the rolls), 90°C (temperature of upper SS roll) and 2 nips (sheet passed through two times).

The coated label base stock was evaluated for release and retained adhesive properties as follows:

1. An 8 inch section of Scotch Magic tape #810 was laminated to the coated paper.
2. Assure good contact is made between the tape and the release composition.
3. Allow tape to remain on the release surface for three weeks at room temperature.
4. Using an Instron tester, the force required to peel the tape from the release surface was measured (at 180 degrees with test speed of 10.0 in/min).
5. Remove second piece of tape from release surface by hand.
6. Apply the tape in #5 to a clear, smooth stainless steel panel (Chem Instruments, cat. #TP-39). The sample is rolled down, two passes with a 2-kilogram rubber-covered roller (Chem Instruments, cat #WR-100) and allowed to dwell 20 minutes prior to testing.
7. The peel strength was measured as in #4.
8. The release value was reported as peel strength measured in #7 (grams/0.75 inch).
9. A new piece of tape (without contact of release paper) was applied to the stainless steel panel as in #6 and removed and measured as in #4.
10. The percent retained adhesion = adhesion from #7 above X 100/adhesion from #9 above.

Table 1 below shows the measured physical properties of the coated label base stock using the starch ester of this invention and compared to a commercial silicone release paper. This example shows similar release energies of the starch based coating while maintaining excellent adhesion properties.

TABLE 1

| Sample | Release (g/in) | % Retained Adhesion |
|---|---|---|
| Starch acetate (DS = 1.3) | 255 | 98 |
| Rhinelander Tight Release (Silicone, #402-8437) | 52 | 88 |
| Base (uncoated) | fiber tear | -- |

EXAMPLE III

A release coating composition was prepared as in Example I using 30 g of anhydrous granular starch (70% amylose corn starch with acetate DS = 1.3), 10.0 g of succinate polyester (Resoflex R-804, Cambridge Industries of America) and tap water to total 133.3 g. The coating composition was coated onto a label base stock as in Example II and various physical properties measured and compared to two grades of commercial silicone release paper as shown below in Table 2. This example shows the formation of a smooth continuous coating similar in properties to silicone coated paper.

TABLE 2

| Sample | Porosity - High Pressure Gurley Gurley (sec) | Parker Print | Hercules Size Test |
|---|---|---|---|
| Base (uncoated) | 800 | 5.10 | 27 |
| Starch Acetate (DS = 1.3) on Basestock | 4950 | 3.7 | 185 |
| Rhinelander Premium Release (Silicone, # 442-8354) | 2670 | 3.86 | 960 |
| Rhinelander Tight Release (Silicone, # 402-8437) | 3152 | 3.86 | 2580 |

EXAMPLE IV

An acid degraded waxy starch was predispersed and then acetylated to a DS of 1,0. The acetylated product was purified by decanting the aqueous media and triturating with distilled water. The coating formulation was prepared as illustrated in Example I. Other similar coatings were made using different starch esters, either waxy corn or high amylose corn (70% amylose) based, and either dispersed or granular. The prepared compositions were coated onto a paper label basestock as in Example II and tested for various physical properties with the results given below in Table 3. The results show that the starch ester can be used in either granular or dispersed form and processed at different temperatures with satisfactory coating results. All samples had porosities of greater than 100,000 high pressure Gurley seconds.

TABLE 3

| Sample No. | Starch Structure | Starch Type | % Plasticizer | Formulation Temp (°C) | Parker Print | Release Energy (g/in) |
|---|---|---|---|---|---|---|
| 1 | dispersed | waxy | 25 | RT | 2.3 | 572 |
| 2 | dispersed | waxy | 25 | 65 | 2.5 | 561 |
| 3 | granular | waxy | 25 | RT | 3.9 | 295 |
| 4 | granular | waxy | 25 | 65 | 3.3 | 289 |
| 5 | granular | High Amylose | 25 | RT | 3.1 | 255 |
| 6 | granular | High Amylose | 25 | 65 | 2.2 | 230 |
| 7 | dispersed | Waxy | 50 | 65 | 2.9 | 225 |

EXAMPLE V

A moisture vapor barrier coating composition containing the starch esters of this invention was prepared as follows.

Into a 250 mi Erlenmeyer flask, 30.0 g of anhydrous granular starch acetate (70% amylose corn starch with acetate DS = 1.3), 10.0 g succinate polyester (Resoflex R-804, Cambridge Industries of America) and tap water were

added to bring the total weight to 133.3 g. Using a stainless steel mixing spoon, the contents of the Erlenmeyer were mixed vigorously until the mixture formed a paste. A lead weight was placed around the opening of the flask and the flask placed in a boiling water bath so that the water level was above the material contents. The flask was heated for one hour with occasional stirring and then removed from the boiling water bath and mixed well. Water was added to bring the weight up to the starting tare weight. The mixture was placed back in the boiling water bath until ready for application as shown below.

EXAMPLE VI

A sheet of Rhinelander paper label base stock (9" x 11") (bases weight; 42#) was placed on a large glass plate and the top edge of the paper taped to the glass plate, The glass plate was laid on a flat horizontal surface and a #15 wire round placed at the top of the paper substrate. The coating material prepared in Example I was removed from the boiling water bath and a ½ inch bead applied across the top of the paper substrate (just below the wire round). The ends of the wire round were grasped and drawn down past the end of the paper substrate while applying light pressure. The paper with coating was removed from the glass plate and placed on a drying ring with the coated side facing down. The center disk was placed onto the drying ring and a weight placed thereon and the coating was allowed to air dry.

The dried paper substrate was removed from the drying ring. The coated substrate was calendered using a heated stainless steel roller with the coated side facing the heated roller. The conditions were 34 500 kPa (5000 psi) (pressure between the rolls), 90°C (temperature of upper SS roll) and 2 nips (sheet passed through two times).

The coated label base stock was evaluated for water vapor transmission rate (MVTR) using TAPPI T448 om-89 as follows:

1. Place desiccant in the test container (No. 68-1, Thwing Albert Instrument Co.) to fill the container within 5 mm of top,
2. Cut 3 inch diameter circle out of sample sheet to be tested,
3. Place test sheet coated side down on the test container,
4. Place top ring on the test container and screw down,
5. Place test container in a humidity cabinet at 50% relative humidity and 23°C.
6. Remove the sample at given intervals (24 hours) and record weight.
7. Calculate the water vapor transmission rate as follows:

$$MVTR = g/(m^2)(day) = x/Ay$$

where

x = gain for time period (y) in grams
y = time for the gain in days
A = exposed area of specimen ($m^2$).

Table 4 below shows the improved water vapor transmission rate (MVTR) using the coating composition as prepared in Example I (starch acetate DS = 1.3) and a similar coating composition using an acid degraded fluidity high amylose (70%) corn starch (Acetate DS =1.5).

TABLE 4

| Moisture Vapor Transmission Rate at 50%RH, 23°C | |
|---|---|
| Sample | MVTR ($g/m^2$/day) |
| Base (no coating) | 170.5 |
| Starch Acetate (DS = 1.3) | 97.19 |
| Fluidity Starch Acetate (DS = 1,5) | 85.10 |

EXAMPLE VII

A moisture vapor barrier coating composition containing the starch ester of this invention was prepared as follows.

Into a 250 ml Erlenmeyer flask, 50.0 g of anhydrous granular starch acetate (70% amylose corn starch with acetate DS = 1.3), 16.7 g ethoxylated bis-phenol A (Macol 206-EM, PPG Industries) and tap water were added to bring the total weight to 150.7 g. Using a stainless steel mixing spoon, the contents of the Erlenmeyer were mixed vigorously until the mixture formed a paste. A lead weight was placed around the opening of the flask and the flask placed in a boiling water bath so that the water level was above the material contents. The flask was heated for two hours with occasional stirring and then removed from the boiling water bath and mixed well. Water was added to bring the weight up to the starting tare weight. The mixture was placed back in the boiling water bath until ready for application as described below.

A sheet of Rhinelander paper label base stock (9" x 11") was placed on a large glass plate and the top edge of the paper taped to the glass plate. The glass plate was laid on a flat horizontal surface and a #9 wire round placed at the top of the paper substrate. The coating material prepared above was removed from the boiling water bath and a ½ inch bead applied across the top of the paper substrate (just below the wire round). The ends of the wire round were grasped and drawn down past the end of the paper substrate while applying light pressure. The paper with coating was removed from the glass plate and placed on a drying ring with the coated side facing down. The center disk was placed onto the drying ring and a weight placed thereon and the coating was allowed to dry. The dried paper substrate was removed from the drying ring. The coated substrate was calendered using a heated stainless steel roller with the coated side facing the heated roller. The conditions were 34 500 kPa (5000 psi) (pressure between the rolls). 90°C (temperature of upper SS roll) and 2 nips (sheet passed through two times).

The label base stock coated with the starch acetate composition as described above as well as a coated copy material with the same coating were both evaluated for physical properties i.e., High Pressure (HP) Gurley and Hercules Size Test (HST). In a similar manner, paper coated with a starch propionate (DS =1.3) composition was evaluated and the results given below in Table 5

TABLE 5

| | Label Base Stock | | Copy Paper | |
|---|---|---|---|---|
| Sample | HP Gurley | HST | HP Gurley | HST |
| Starch Acetate | >100,000 sec. | 82 sec. | 42 sec. | 22 sec |
| Starch Propionate | >100,000 sec. | 92 sec. | 65 sec. | 40 sec |
| No Coating | 800 sec. | 27 sec. | 11.1 sec. | 10 sec |

## Claims

1. A release or moisture vapor barrier coating composition comprising:

    a) a starch ester having an ester component of 2 to 8 carbon atoms and a degree of substitution (DS) of from 1.0 to 2.2;
    b) a hydrophobic plasticizer, which plasticizer is a non-volatile, polar organic material that is compatible with the starch ester and is present in sufficient amount to lower the $T_g$ of the starch ester to a temperature of 75 to 200°C; and
    c) water;

    wherein the composition comprises a latex of discrete particles of starch and plasticizer suspended in water.

2. The composition of Claim 1 wherein the starch ester has a DS of from 1,2 to 1.9.

3. The composition of any of the preceding claims wherein the starch ester has 2 to 5 carbon atoms in the ester component.

4. The composition of any of the preceding claims which comprises from 10 to 50% by weight of starch ester, about 0 to 30% *by* weight of plasticizer and 20 to 90% by weight of water.

5. The composition of any of the preceding claims wherein the starch ester has the formula:

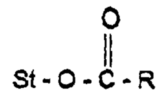

where St is the starch base material and R is an alkyl, aryl, alkenyl, alkaryl or aralkyl of 1 to 7 carbon atoms.

**6.** The composition of any of the preceding claims wherein the plasticizer contains a sulfonamide, alcohol, amide or ester group.

**7.** A process for preparing a release or moisture vapor barrier coated substrate comprising:

a) providing a coating composition comprising a latex of a starch ester having the composition of any of the preceding claims,
b) applying the coating composition to a substrate, and
c) heating the coated substrate to a temperature at or above the $T_g$ of the starch ester to melt the particles and form a continuous film.

**8.** The process of Claim 7 wherein the coated substrate is dried prior to heating.

**9.** The process of Claim 8 wherein the substrate is paper.

**10.** A pressure sensitive adhesive structure comprising a substrate layer, a pressure-sensitive adhesive layer and a release coating layer wherein the release coating comprises the composition of any of Claims 1 to 6.

**Patentansprüche**

**1.** Beschichtungszusammensetzung für eine Trenn- oder Wasserdampfsperrschicht, umfassend

a) einen Stärkeester, der eine Esterkomponente mit 2 bis 8 Kohlenstoffatomen und einen Substitutionsgrad (degree of substitution = DS) von 1,0 bis 2,0 hat;
b) einen hydrophoben Weichmacher, wobei der Weichmacher ein nichtflüchtiges, polares, organisches Material ist, das mit dem Stärkeester kompatibel ist und das in ausreichender Menge vorliegt, um die $T_g$ des Stärkeesters auf eine Temperatur von 75 bis 200°C zu erniedrigen; und
c) Wasser,

wobei die Zusammensetzung einen Latex aus diskreten Partikeln aus Stärke und Weichmacher, suspendiert in Wasser, umfasst.

**2.** Zusammensetzung nach Anspruch 1, in der der Stärkeester einen DS von 1,2 bis 1,9 hat.

**3.** Zusammensetzung nach einem der vorangehenden Ansprüche, in der der Stärkeester 2 bis 5 Kohlenstoffatome in der Esterkomponente hat.

**4.** Zusammensetzung nach einem der vorangehenden Ansprüche, die 10 bis 50 Gew.-% Stärkeester, etwa 0 bis 30 Gew.-% Weichmacher und 20 bis 90 Gew.-% Wasser umfasst.

**5.** Zusammensetzung nach einem der vorangehenden Ansprüche, in der der Stärkeester die folgende Formel hat:

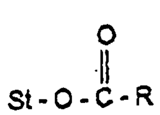

worin St das Stärkebasismaterial ist und R ein Alkyl, Aryl, Alkenyl, Alkaryl oder Aralkyl mit 1 mit 7 Kohlenstoffatomen ist.

**6.** Zusammensetzung nach einem der vorangehenden Ansprüche, in der der Weichmacher eine Sulfonamid-, Alkohol-, Amid- oder Estergruppe enthält.

**7.** Verfahren zur Herstellung eines Substrats, das mit einer Trenn- oder Wasserdampfsperrschicht beschichtet ist, umfassend:

a) Bereitstellen einer Beschichtungszusammensetzung, die einen Latex eines Stärkeesters umfasst, der die Zusammensetzung nach einem der vorangehenden Ansprüche hat,
b) Auftragen der Beschichtungszusammensetzung auf ein Substrat und
c) Erwärmen des beschichteten Substrats auf eine Temperatur bei der oder über der $T_g$ des Stärkeesters, um die Partikel zu schmelzen und einen kontinuierlichen Film zu bilden.

**8.** Verfahren nach Anspruch 7, wobei das beschichtete Substrat vor dem Erwärmen getrocknet wird.

**9.** Verfahren nach Anspruch 8, wobei das Substrat Papier ist.

**10.** Haftkleberstruktur, umfassend eine Substratschicht, eine druckempfindliche Klebstoffschicht und eine Trennmittelbeschichtungsschicht, wobei die Trennmittelbeschichtung die Zusammensetzung nach einem der Ansprüche 1 bis 6 umfasst.

## Revendications

**1.** Composition de revêtement de séparation ou de barrière à la vapeur d'eau, comprenant :

a) un ester d'amidon comprenant un constituant ester de 2 à 8 atomes de carbone et ayant un degré de substitution (DS) de 1,0 à 2,2 ;
b) un plastifiant hydrophobe, plastifiant qui est une matière organique polaire non volatile qui est compatible avec l'ester d'amidon et qui est présente en une quantité suffisante pour abaisser la Tg de l'ester d'amidon à une température comprise dans l'intervalle de 75 à 200 °C ;
c) de l'eau ;

ladite composition comprenant un latex de particules discrètes d'amidon et d'un plastifiant en suspension dans de l'eau.

**2.** Composition suivant la revendication 1, dans laquelle l'ester d'amidon a un DS de 1,2 à 1,9.

**3.** Composition suivant l'une quelconque des revendications précédentes, dans laquelle l'ester d'amidon a 2 à 5 atomes de carbone dans le constituant ester.

**4.** Composition suivant l'une quelconque des revendications précédentes, qui comprend 10 à 50 % en poids d'ester d'amidon, environ 0 à 30 % en poids de plastifiant et 20 à 90 % en poids d'eau.

**5.** Composition suivant l'une quelconque des revendications précédentes, dans laquelle l'ester d'amidon répond à la formule :

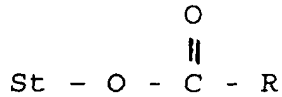

dans laquelle St représente l'amidon de base et R représente un groupe alkyle, aryle, alcényle, alcaryle ou aralkyle ayant 1 à 7 atomes de carbone.

**6.** Composition suivant l'une quelconque des revendications précédentes, dans laquelle le plastifiant contient un groupe sulfonamide, alcool, amide ou ester.

**7.** Procédé pour la préparation d'un substrat muni d'un revêtement de séparation ou de barrière à la vapeur d'eau, comprenant les étapes consistant :

a) à fournir une composition de revêtement comprenant un latex d'un ester d'amidon ayant la composition suivant l'une quelconque des revendications précédentes,
b) à appliquer la composition de revêtement à un substrat et
c) à chauffer le substrat revêtu à une température égale ou supérieure à la Tg de l'ester d'amidon pour faire fondre les particules et former un film continu.

**8.** Procédé suivant la revendication 7, dans lequel le substrat revêtu est séché avant chauffage.

**9.** Procédé suivant la revendication 8, dans lequel le substrat consiste en papier.

**10.** Structure d'adhésif sensible à la pression comprenant une couche de substrat, une couche d'adhésif sensible à la pression et une couche de revêtement de séparation, dans laquelle le revêtement de séparation comprend la composition suivant l'une quelconque des revendications 1 à 6.